# EUROPEAN PATENT SPECIFICATION

(11) **EP 4 552 768 B1**
(45) Date of publication and mention of the grant of the patent: **13.05.2026**
(21) Application number: 24826945.8
(22) Date of filing: 09.12.2024
(51) Int. Cl.: B22D 19/16, B32B 15/01, B21B 1/46, B22D 11/00, B22D 21/02, C22C 1/04, C22C 1/05, C22C 1/10, H01M 50/562, B23K 26/352, B82Y 30/00, B82Y 40/00

(54) **PROCESS FOR COPPER-ALUMINUM COMPOSITE BOARD PREPARED BY MEANS OF MOLTEN ALUMINUM CONTINUOUS CASTING**
VERFAHREN FÜR KUPFER-ALUMINIUM-VERBUNDPLATTE HERGESTELLT DURCH STRANGGIESSEN VON GESCHMOLZENEM ALUMINIUM
PROCEDE DE FABRICATION DE PLAQUES COMPOSITES CUIVRE-ALUMINIUM PAR COULÉE CONTINUE D'ALUMINIUM FONDU

(30) Priority: 23.04.2024 CN 202410491363
(43) Date of publication of application: 14.05.2025
(73) Proprietor: Trio Metal (GZ) Co., Ltd, Guangzhou, Guangdong 510000 (CN); Guangzhou Zhongshan New Energy Technology Co., Ltd., Guangzhou, Guangdong 510000 (CN)
(72) Inventor: LV, Jiangang, Guangzhou, Guangdong 510000 (CN); WANG, Fenglin, Guangzhou, Guangdong 510000 (CN); YANG, Weifu, Guangzhou, Guangdong 510000 (CN); HUANG, yufan, Guangzhou, Guangdong 510000 (CN); ZHAI, Xuemin, Guangzhou, Guangdong 510000 (CN); FENG, Haiquan, Guangzhou, Guangdong 510000 (CN)
(74) Representative: Plavsa, Olga
(86) International application number: PCT/CN2024/137700
(87) International publication number: WO 2025/067573

(56) References cited:
- CN-A- 101 758 071
- CN-A- 114 798 726
- CN-A- 114 798 726
- CN-A- 115 338 375
- CN-A- 115 338 375
- CN-A- 118 080 821
- US-A1- 2019 046 939
- US-A1- 2021 107 798

## Description

### TECHNICAL FIELD

The present invention relates to the field of composite plate material technologies, in particular to a process for a copper-aluminum composite plate material prepared by aluminum liquid continuous casting.

### BACKGROUND ART

Copper and aluminum are important nonferrous metals. Copper has good electrical conductivity, thermal conductivity and corrosion resistance, and aluminum has good electrical conductivity and thermal conductivity. Compared with aluminum, copper resources are in short supply, aluminum resources are abundant, and the specific weight of aluminum is small and the price thereof is low. An aluminum-copper composite metal plate strip is a bimetal formed by coating copper with aluminum as a matrix outer layer. It is a new conductor material and decorative material that combines high-quality conductivity and low-cost resources of aluminum with high chemical stability and lower contact resistance of copper. The aluminum-copper composite metal plate strip integrates respective advantages of copper and aluminum. The aluminum-copper composite metal plate strip instead of a copper plate strip is widely used in high-tech fields such as military industry, aerospace, electronic computers and electronic devices, as well as electric power, high and low voltage electrical appliances, automation and construction industries, and is the research focus of current metal materials.

In international standards, the composite strength of a copper-aluminum composite material is ≥12 kgf/cm, and the requirement of existing lithium batteries for the composite strength of the copper-aluminum composite material is ≥15 kgf/cm. With the continuous development of new energy technology, the lithium batteries are core energy storage devices in new energy, and the copper-aluminum composite material is a core component material of the lithium battery. Therefore, lithium battery manufacturers put forward higher requirements for the strength of the copper-aluminum composite material.

At present, production methods of the copper-aluminum composite plate strip mainly include solid-solid composite methods such as rolled composite, explosive composite, extrusion-drawing composite and diffusion welding composite, and liquid-solid composite methods such as core-filled continuous casting and double-crystallizer continuous casting. The process of the solid-solid composite methods is generally backward, with low yield and unstable quality, and is not suitable for continuous large-scale production. Therefore, the liquid-solid composite methods have become the focus of research. However, the liquid-solid composite methods directly composite aluminum liquid with a copper plate, which will generate a very thick bonding interface layer. The thicker the bonding interface layer, the more intermetallic compounds and the lower the strength of the composite plate strip. Therefore, the bonding interface layer formed by directly compositing the aluminum liquid with the copper plate is thicker and the strength of the composite plate is lower, which cannot meet the requirements of use.

The Chinese invention patent CN101758071B discloses a production method of an aluminum-copper composite metal plate strip, which prepares the copper-aluminum composite plate strip by adopting an oxygen-free continuous casting-rolling method. This method needs to perform on-line polishing until there is no oxide layer before copper-aluminum bonding, the process is relatively complicated, and the copper-aluminum bonding strength is lower (about 100 MPa).

CN115338375A discloses a production method of a copper-aluminum composite plate strip material, which comprises the following steps of: heating an oxygen-free copper plate strip which is not passivated on line in molten aluminum; the prepared semi-solid aluminum is in contact with a copper plate strip, anaerobic continuous cast rolling is carried out, the copper-aluminum composite plate strip material is obtained.

### SUMMARY OF THE INVENTION

An objective of the present invention is to provide a process for a copper-aluminum composite plate material prepared by aluminum liquid continuous casting, which can be used for preparing a pole of a new energy battery. Through the process of continuous casting and multiple rolling, the wettability of an aluminum-copper metal interface is improved, and the prepared composite plate material has high bonding strength, small interface thickness, high composite strength, good mechanical properties, simple preparation method, low cost, high efficiency and broad application prospects.

The technical solution of the present invention is realized in such a way, which is set out in the appended set of claims.

The present invention has the following beneficial effects:
When the wettability between metal matrixes is poorer, interface defects such as interface pores and cracks will be generated between the metal matrixes in a preparation process, which will lead to brittle phase compounds generated at the interface and reduce the bonding strength between metals, thus affecting the service performance of alloy materials.

According to the present invention, the Cu@Si@Al Janus nanosheets are prepared. First, silica hollow nanospheres are prepared by an emulsion method, and are crushed under the action of ball milling to form the nanosheets. Then, after the surface is modified by the silane coupling agent with amino groups, the nanosheets are added into the organic solvent and the aqueous solution. The modified silica nanosheets are dispersed at an oil-water interface, aluminum isopropoxide is dissolved in the organic solvent and the copper salt is dissolved in water. Under the action of the amino groups on the modified silica nanosheets, aluminum isopropoxide is attached to the surface of the nanosheets, and a sol-gel reaction occurs under the catalysis of a small amount of water, so that alumina is formed and fixed on the side of the nanosheets close to an oil layer. At the same time, copper ions are fixed on the amino groups on the side of the nanosheets close to a water layer under a complexation action of the amino groups, and citric acid is further added to form a gel. After the nanosheets are separated, the nanosheets are calcined, so as to prepare the CuO@SiO₂@Al₂O₃ nanosheets. After magnesium thermal reduction and hydrogen reduction, Cu@Si@Al Janus nanosheets are prepared.

According to the present invention, the Cu@Si@Al Janus nanosheets are added into the aluminum liquid, and automatically dissociate to the aluminum-copper metal interface, the layer on the nanosheets with aluminum metal permeates to the aluminum metal layer, and the layer with copper metal permeates to the copper metal layer. After rolling, the thickness of the interface layer is greatly reduced, and the pores or air gaps existing at the interface are also reduced, so that the bonding strength and composite strength are improved, and the mechanical properties of the prepared composite plate material are enhanced.

According to the present invention, the copper strip is textured, so that the interface becomes rough, and the interface bonding force is enhanced; furthermore, the layer of 11-mercaptoundecanoic acid solution is coated on the surface; since the molecular structure contains sulfur groups and carboxyl groups, better surface activity is realized, and an organic-inorganic composite layer is formed by in-situ reaction, so that the wettability and dispersibility of the metal interface are improved, thereby obviously improving the infiltration and composition between the copper matrix and the aluminum matrix, and improving the interface bonding force between the copper matrix and the aluminum matrix.

The copper-aluminum composite plate material prepared by aluminum liquid continuous casting according to the present invention can be used to prepare the pole of a new energy battery, the wettability of the aluminum-copper metal interface is improved through the process of continuous casting and multiple rolling, and the prepared composite plate material has high bonding strength, small interface thickness, high composite strength, good mechanical properties, simple preparation method, low cost, high efficiency, and broad application prospects.

### DETAILED DESCRIPTION

The technical solution in the embodiments of the present invention will be described clearly and completely below. Apparently, the described embodiments are only part but not all of the embodiments of the present invention. Based on the embodiments in the present invention, all other embodiments within the scope of the appended claims belong to the scope of protection of the present invention.

### Preparation Embodiment 1: Preparation of Cu@Si@Al Janus nanosheets

The method is as follows:
T1, preparation of SiO₂ hollow nanospheres: dissolving 12 parts by weight of ethyl orthosilicate in 100 parts by weight of dichloromethane to prepare an oil phase; dissolving 0.5 part by weight of Tween-20 in 30 parts by weight of water to prepare a water phase; dropwise adding the water phase into the oil phase, emulsifying at 10000 r/min for 15 min, adjusting a pH value of the solution to 10, heating to 50°C, stirring for reaction for 10 h, centrifuging, washing, drying, and calcining at 300°C for 1 h to prepare SiO₂ hollow nanospheres;
T2, ball milling: performing ball milling on the SiO₂ hollow nanospheres prepared in step T1 for 2 h to prepare SiO₂ nanosheets;
T3, modification: adding 100 parts by weight of the SiO₂ nanosheets prepared in step T2 into 200 parts by weight of ethanol, adding 22 parts by weight of silane coupling agent KH550, heating to 40°C, stirring for reaction for 0.5 h, centrifuging, washing and drying to prepare modified SiO₂ nanosheets;
T4, preparation of CuO@SiO₂@Al₂O₃ nanosheets: dissolving 12 parts by weight of aluminum isopropoxide in 100 parts by weight of dichloromethane, standing, adding 50 parts by weight of the modified SiO₂ nanosheets prepared in step T3, which float on the interface, dropwise adding 100 parts by weight of aqueous solution containing 7 parts by weight of copper chloride, then adding 3 parts by weight of citric acid, standing for reaction for 30 min, centrifuging, washing, drying, and calcining at 500°C for 1 h to prepare CuO@SiO₂@Al₂O₃ nanosheets; and
T5, reduction: mixing 100 parts by weight of the CuO@SiO₂@Al₂O₃ nanosheets prepared in step T4 with 7 parts by weight of magnesium powder, heating to 700°C, performing reduction reaction for 0.5 h, and then performing hydrogen reduction reaction at 600°C for 1 h, with a ventilation rate of hydrogen being 20 mL/min to prepare Cu@Si@Al Janus nanosheets.

### Preparation Embodiment 2: Preparation of Cu@Si@Al Janus nanosheets

The method is as follows:
T1, preparation of SiO₂ hollow nanospheres: dissolving 15 parts by weight of ethyl orthosilicate in 100 parts by weight of dichloromethane to prepare an oil phase; dissolving 1 part by weight of Tween-40 in 50 parts by weight of water to prepare a water phase; dropwise adding the water phase into the oil phase, emulsifying at 10000 r/min for 15 min, adjusting a pH value of the solution to 11, heating to 60°C, stirring for reaction for 12 h, centrifuging, washing, drying and calcining at 500°C for 3 h to prepare SiO₂ hollow nanospheres;
T2, ball milling: performing ball milling on the SiO₂ hollow nanospheres prepared in step T1 for 4 h to prepare SiO₂ nanosheets;
T3, modification: adding 100 parts by weight of the SiO₂ nanosheets prepared in step T2 into 200 parts by weight of ethanol, adding 25 parts by weight of silane coupling agent KH602, heating to 50°C, stirring for reaction for 1 h, centrifuging, washing and drying to prepare modified SiO₂ nanosheets;
T4, preparation of CuO@SiO₂@Al₂O₃ nanosheets: dissolving 15 parts by weight of aluminum isopropoxide in 100 parts by weight of dichloromethane, standing, adding 50 parts by weight of the modified SiO₂ nanosheets prepared in step T3, which float on the interface, dropwise adding 100 parts by weight of aqueous solution containing 12 parts by weight of copper sulfate, then adding 5 parts by weight of citric acid, standing for reaction for 50 min, centrifuging, washing, drying, and calcining at 700°C for 3 h to prepare CuO@SiO₂@Al₂O₃ nanosheets; and
T5, reduction: mixing 100 parts by weight of the CuO@SiO₂@Al₂O₃ nanosheets prepared in step T4 with 12 parts by weight of magnesium powder, heating to 800°C, performing reduction reaction for 1 h, and then performing hydrogen reduction reaction at 800°C for 2 h, with a ventilation rate of hydrogen being 30 mL/min to prepare Cu@Si@Al Janus nanosheets.

### Preparation Embodiment 3: Preparation of Cu@Si@Al Janus nanosheets

The method is as follows:
T1, preparation of SiO₂ hollow nanospheres: dissolving 13 parts by weight of ethyl orthosilicate in 100 parts by weight of dichloromethane to prepare an oil phase; dissolving 0.7 part by weight of Tween-80 in 40 parts by weight of water to prepare a water phase; dropwise adding the water phase into the oil phase, emulsifying at 10000 r/min for 15 min, adjusting a pH value of the solution to 10.5, heating to 55°C, stirring for reaction for 11 h, centrifuging, washing, drying, and calcining at 400°C for 2 h to prepare SiO₂ hollow nanospheres;
T2, ball milling: performing ball milling on the SiO₂ hollow nanospheres prepared in step T1 for 3 h to prepare SiO₂ nanosheets;
T3, modification: adding 100 parts by weight of the SiO₂ nanosheets prepared in step T2 into 200 parts by weight of ethanol, adding 23 parts by weight of silane coupling agent, heating to 45°C, stirring for reaction for 1 h, centrifuging, washing and drying to prepare modified SiO₂ nanosheets;
T4, preparation of CuO@SiO₂@Al₂O₃ nanosheets: dissolving 13 parts by weight of aluminum isopropoxide in 100 parts by weight of dichloromethane, standing, adding 50 parts by weight of the modified SiO₂ nanosheets prepared in step T3, which float on the interface, dropwise adding 100 parts by weight of aqueous solution containing 10 parts by weight of copper nitrate, then adding 4 parts by weight of citric acid, standing for reaction for 40 min, centrifuging, washing, drying and calcining at 600°C for 2 h to prepare CuO@SiO₂@Al₂O₃ nanosheets;
T5, reduction: mixing 100 parts by weight of the CuO@SiO₂@Al₂O₃ nanosheets prepared in step T4 with 10 parts by weight of magnesium powder, heating to 750°C, performing reduction reaction for 1 h, and then performing hydrogen reduction reaction at 700°C for 1.5 h, with a ventilation rate of hydrogen being 25 mL/min to prepare Cu@Si@Al Janus nanosheets.

### Comparative Preparation Embodiment 1

Compared with Preparation Example 3, the difference is that step T3 is not performed.

The method is as follows:
T1, preparation of SiO₂ hollow nanospheres: dissolving 13 parts by weight of ethyl orthosilicate in 100 parts by weight of dichloromethane to prepare an oil phase; dissolving 0.7 part by weight of Tween-80 in 40 parts by weight of water to prepare a water phase; dropwise adding the water phase into the oil phase, emulsifying at 10000 r/min for 15 min, adjusting a pH value of the solution to 10.5, heating to 55°C, stirring for reaction for 11 h, centrifuging, washing, drying, and calcining at 400°C for 2 h to prepare SiO₂ hollow nanospheres;
T2, ball milling: performing ball milling on the SiO₂ hollow nanospheres prepared in step T1 for 3 h to prepare SiO₂ nanosheets;
T3, preparation of CuO@SiO₂@Al₂O₃ nanosheets: dissolving 13 parts by weight of aluminum isopropoxide in 100 parts by weight of dichloromethane, standing, adding 50 parts by weight of the SiO₂ nanosheets prepared in step T2, which float on the interface, dropwise adding 100 parts by weight of aqueous solution containing 10 parts by weight of copper nitrate, then adding 4 parts by weight of citric acid, standing for reaction for 40 min, centrifuging, washing, drying and calcining at 600°C for 2 h to prepare CuO@SiO₂@Al₂O₃ nanosheets; and
T4, reduction: mixing 100 parts by weight of the CuO@SiO₂@Al₂O₃ nanosheets prepared in step T3 with 10 parts by weight of magnesium powder, heating to 750°C, performing reduction reaction for 1 h, and then performing hydrogen reduction reaction at 700°C for 1.5 h, with a ventilation rate of hydrogen being 25 mL/min to prepare Cu@Si@Al Janus nanosheets.

### Comparative Preparation Embodiment 2

Compared with Preparation Example 3, the difference is that step T5 is not performed.

The method is as follows:
T1, preparation of SiO₂ hollow nanospheres: dissolving 13 parts by weight of ethyl orthosilicate in 100 parts by weight of dichloromethane to prepare an oil phase; dissolving 0.7 part by weight of Tween-80 in 40 parts by weight of water to prepare a water phase; dropwise adding the water phase into the oil phase, emulsifying at 10000 r/min for 15 min, adjusting a pH value of the solution to 10.5, heating to 55°C, stirring for reaction for 11 h, centrifuging, washing, drying, and calcining at 400°C for 2 h to prepare SiO₂ hollow nanospheres;
T2, ball milling: performing ball milling on the SiO₂ hollow nanospheres prepared in step T1 for 3 h to prepare SiO₂ nanosheets;
T3, modification: adding 100 parts by weight of the SiO₂ nanosheets prepared in step T2 into 200 parts by weight of ethanol, adding 23 parts by weight of silane coupling agent, heating to 45°C, stirring for reaction for 1 h, centrifuging, washing and drying to prepare modified SiO₂ nanosheets;
T4, preparation of CuO@SiO₂@Al₂O₃ nanosheets: dissolving 13 parts by weight of aluminum isopropoxide in 100 parts by weight of dichloromethane, standing, adding 50 parts by weight of the modified SiO₂ nanosheets prepared in step T3, which float on the interface, dropwise adding 100 parts by weight of aqueous solution containing 10 parts by weight of copper nitrate, then adding 4 parts by weight of citric acid, standing for reaction for 40 min, centrifuging, washing, drying and calcining at 600°C for 2 h to prepare CuO@SiO₂@Al₂O₃ nanosheets.

### Reference

The reference provides a process of a copper-aluminum composite plate material prepared by aluminum liquid continuous casting, which includes the following steps:
S1, smelting: heating an industrial LF21 pure aluminum ingot to 750°C and smelting for 2 h;
S2, standing: degassing the aluminum liquid smelted in step S1, and keeping the temperature and standing for 20 min;
S3, copper strip pretreatment: treating a red copper T2 copper strip of 2 mm thick with steel brush hair, and then performing ultrasonic cleaning for 10 min;
S4, copper strip heating: heating the pretreated copper strip obtained in step S3 to 350°C;
S5, continuous casting: under the protection of nitrogen, enabling the copper strip treated in step S4 to continuously pass through a continuous casting device and a crystallizer, continuously casting the aluminum liquid treated in step S2 on the copper strip through a casting system, performing quenching crystallization on a copper-aluminum composite material by the crystallizer and performing oxygen-free continuous casting;
wherein a casting speed is 1000 mm/min; a casting width is 50 mm; a casting thickness is 10 mm, and a cooling rate of the quenching crystallization is 120°C/min; and
S6, continuous rolling: rolling the copper-aluminum composite material continuously cast in step S5 to prepare a copper-aluminum composite plate material prepared by aluminum liquid continuous casting;
wherein a thickness of the copper-aluminum composite plate material prepared by liquid aluminum continuous casting is 7 mm, a rolling pressure is 1000000 N, a rolling speed is 1000 mm/min, and a rolling tension is 100000 N.

### Embodiment 2

The present embodiment provides a process of a copper-aluminum composite plate material prepared by aluminum liquid continuous casting, which includes the following steps:
S1, smelting: heating an industrial LF21 pure aluminum ingot to 750°C and smelting for 2 h;
S2, standing: adding the Cu@Si@Al Janus nanosheets prepared in Preparation Example 1 into the aluminum liquid smelted in step S1, wherein an addition amount is 6 wt% of the aluminum liquid, stirring and mixing for 30 min, degassing, and keeping the temperature and standing for 20 min;
S3, copper strip pretreatment: treating a red copper T2 copper strip of 2 mm thick with steel brush hair, and then performing ultrasonic cleaning for 10 min;
S4, copper strip heating: heating the pretreated copper strip obtained in step S3 to 300°C;
S5, continuous casting: under the protection of nitrogen, enabling the copper strip treated in step S4 to continuously pass through a continuous casting device and a crystallizer, continuously casting the aluminum liquid treated in step S2 on the copper strip through a casting system, performing quenching crystallization on a copper-aluminum composite material by the crystallizer and performing oxygen-free continuous casting;
wherein a casting speed is 1000 mm/min; a casting width is 50 mm; a casting thickness is 10 mm, and a cooling rate of the quenching crystallization is 120°C/min; and
S6, continuous rolling: rolling the copper-aluminum composite material continuously cast in step S5 to prepare a copper-aluminum composite plate material prepared by liquid aluminum continuous casting;
wherein a thickness of the copper-aluminum composite plate material prepared by liquid aluminum continuous casting is 7 mm, a rolling pressure is 1000000 N, a rolling speed is 1000 mm/min, and a rolling tension is 100000 N.

### Embodiment 3

The present embodiment provides a process of a copper-aluminum composite plate material prepared by aluminum liquid continuous casting, which includes the following steps:
S1, smelting: heating an industrial LF21 pure aluminum ingot to 700°C and smelting for 1 h;
S2, standing: adding the Cu@Si@Al Janus nanosheets prepared in Preparation Example 1 into the aluminum liquid smelted in step S1, wherein an addition amount is 5 wt% of the aluminum liquid, stirring and mixing for 30 min, degassing, and keeping the temperature and standing for 10 min;
S3, copper strip pretreatment: treating a red copper T2 copper strip of 2 mm thick with steel brush hair, and then performing ultrasonic cleaning for 10 min, wherein the surface is coated with a layer of ethylene glycol dimethyl ether solution of 11-mercapto undecanoic acid with a concentration of 7 wt%;
S4, copper strip heating: heating the pretreated copper strip obtained in step S3 to 350°C;
S5, continuous casting: under the protection of nitrogen, enabling the copper strip treated in step S4 to continuously pass through a continuous casting device and a crystallizer, continuously casting the aluminum liquid treated in step S2 on the copper strip through a casting system, performing quenching crystallization on a copper-aluminum composite material by the crystallizer and performing oxygen-free continuous casting;
wherein a casting speed is 1000 mm/min; a casting width is 50 mm; a casting thickness is 10 mm, and a cooling rate of the quenching crystallization is 100°C/min; and
S6, continuous rolling: rolling the copper-aluminum composite material continuously cast in step S5 to prepare a copper-aluminum composite plate material prepared by liquid aluminum continuous casting;
wherein a thickness of the copper-aluminum composite plate material prepared by liquid aluminum continuous casting is 7 mm, a rolling pressure is 1000000 N, a rolling speed is 1000 mm/min, and a rolling tension is 100000 N.

### Embodiment 4

The present embodiment provides a process of a copper-aluminum composite plate material prepared by aluminum liquid continuous casting, which includes the following steps:
S1, smelting: heating an aluminum ingot to 800°C and smelting for 3 h;
S2, standing: adding the Cu@Si@Al Janus nanosheets prepared in Preparation Example 2 into the aluminum liquid smelted in step S1, wherein an addition amount is 7 wt% of the aluminum liquid, stirring and mixing for 30 min, degassing, and keeping the temperature and standing for 30 min;
S3, copper strip pretreatment: treating a red copper T2 copper strip of 2 mm thick with steel brush hair, and then performing ultrasonic cleaning for 10 min, wherein the surface is coated with a layer of ethylene glycol dimethyl ether solution of 11-mercapto undecanoic acid with a concentration of 12 wt%;
S4, copper strip heating: heating the pretreated copper strip obtained in step S3 to 350°C;
S5, continuous casting: under the protection of nitrogen, enabling the copper strip treated in step S4 to continuously pass through a continuous casting device and a crystallizer, continuously casting the aluminum liquid treated in step S2 on the copper strip through a casting system, performing quenching crystallization on a copper-aluminum composite material by the crystallizer and performing oxygen-free continuous casting;
wherein a casting speed is 1000 mm/min; a casting width is 50 mm; a casting thickness is 10 mm, and a cooling rate of the quenching crystallization is 150°C/min; and
S6, continuous rolling: rolling the copper-aluminum composite material continuously cast in step S5 to prepare a copper-aluminum composite plate material prepared by aluminum liquid continuous casting;
wherein a thickness of the copper-aluminum composite plate material prepared by liquid aluminum continuous casting is 7 mm, a rolling pressure is 1000000 N, a rolling speed is 1000 mm/min, and a rolling tension is 100000 N.

### Embodiment 5

The present embodiment provides a process of a copper-aluminum composite plate material prepared by aluminum liquid continuous casting, which includes the following steps:
S1, smelting: heating an industrial LF21 pure aluminum ingot to 750°C and smelting for 2 h;
S2, standing: adding the Cu@Si@Al Janus nanosheets prepared in Preparation Example 3 into the aluminum liquid smelted in step S1, wherein an addition amount is 6 wt% of the aluminum liquid, stirring and mixing for 30 min, degassing, and keeping the temperature and standing for 20 min;
S3, copper strip pretreatment: treating a red copper T2 copper strip of 2 mm thick with steel brush hair, and then performing ultrasonic cleaning for 10 min, wherein the surface is coated with a layer of ethylene glycol dimethyl ether solution of 11-mercapto undecanoic acid with a concentration of 10 wt%;
S4, copper strip heating: heating the pretreated copper strip obtained in step S3 to 350°C;
S5, continuous casting: under the protection of nitrogen, enabling the copper strip treated in step S4 to continuously pass through a continuous casting device and a crystallizer, continuously casting the aluminum liquid treated in step S2 on the copper strip through a casting system, performing quenching crystallization on a copper-aluminum composite material by the crystallizer and performing oxygen-free continuous casting;
wherein a casting speed is 1000 mm/min; a casting width is 50 mm; a casting thickness is 10 mm, and a cooling rate of the quenching crystallization is 120°C/min; and
S6, continuous rolling: rolling the copper-aluminum composite material continuously cast in step S5 to prepare a copper-aluminum composite plate material prepared by aluminum liquid continuous casting;
wherein a thickness of the copper-aluminum composite plate material prepared by liquid aluminum continuous casting is 7 mm, a rolling pressure is 1000000 N, a rolling speed is 1000 mm/min, and a rolling tension is 100000 N.

### Comparative Embodiment 1

Compared with Embodiment 5, the difference is that the Cu@Si@Al Janus nanosheets are prepared by Comparative Preparation Embodiment 1.

### Comparative Embodiment 2

Compared with Embodiment 5, the difference is that the Cu@Si@Al Janus nanosheets are prepared by Comparative Preparation Embodiment 2.

### Test Embodiment 1

The properties of the copper-aluminum composite plate materials prepared by aluminum liquid continuous casting prepared in Embodiments 2 -5 and Comparative Embodiment 1-2 of the present invention and commercially available similar products were tested. The results are shown in Table 1.

**Table 1**

| Groups | Bonding strength (MPa) | Composite strength (N/mm) | Shear strength (MPa) | Interface layer thickness (µm) |
|---|---|---|---|---|
| Reference | 152 | 104.4 | 34.5 | 55 |
| Embodiment 2 | 170 | 111.8 | 39.5 | 18 |
| Embodiment 3 | 179 | 114.2 | 42.1 | 7 |
| Embodiment 4 | 181 | 113.9 | 41.8 | 7 |
| Embodiment 5 | 182 | 114.5 | 42.6 | 5 |
| Comparative Embodiment 1 | 161 | 106.2 | 35.4 | 47 |
| Comparative Embodiment 2 | 165 | 108.6 | 38.9 | 22 |
| Commercially available | 127 | 78.1 | 25.2 | 147 |

From the above table, it can be seen that the copper-aluminum composite plate materials prepared by aluminum liquid continuous casting prepared in Embodiments 2-5 of the present invention have very well bonding strength and composite strength, large shear strength and small interface layer thickness.

The foregoing is merely preferred embodiments of the present invention, and not used to limit the present invention.

## Claims

1. A process of a copper-aluminum composite plate material prepared by aluminum liquid continuous casting, comprising the following steps:
S1, smelting: heating an aluminum ingot to 700-800°C and smelting for 1-3 h;
S2, standing: degassing aluminum liquid smelted in step S1, and keeping the temperature and standing for 10-30 min; adding Cu@Si@Al Janus nanosheets in an amount of 5-7 wt% of the aluminum liquid before degassing treatment, wherein a preparation method of the Cu@Si@Al Janus nanosheets is as follows:
T1, preparation of SiO₂ hollow nanospheres: dissolving ethyl orthosilicate in an organic solvent to prepare an oil phase; dissolving an emulsifier in water to prepare a water phase; dropwise adding the water phase into the oil phase, emulsifying, adjusting a pH value of the solution to 10-11, performing heating and stirring reaction, centrifuging, washing, drying and calcining to prepare SiO₂ hollow nanospheres;
T2, ball milling: performing ball milling on the SiO₂ hollow nanospheres prepared in step T1 to prepare SiO₂ nanosheets;
T3, modification: adding the SiO₂ nanosheets prepared in step T2 into ethanol, adding a silane coupling agent, performing heating and stirring reaction, centrifuging, washing and drying to prepare modified SiO₂ nanosheets;
T4, preparation of CuO@SiO₂@Al₂O₃ nanosheets: dissolving aluminum isopropoxide in dichloromethane, standing, adding the modified SiO₂ nanosheets prepared in step T3, which float on the interface, dropwise adding an aqueous solution containing a copper salt, then adding citric acid, performing standing reaction, centrifuging, washing, drying and calcining to prepare CuO@SiO₂@Al₂O₃ nanosheets; and
T5, reduction: mixing the CuO@SiO₂@Al₂O₃ nanosheets prepared in step T4 with magnesium powder, performing heating reduction reaction, and then performing hydrogen reduction reaction to prepare the Cu@Si@Al Janus nanosheets;
wherein in step T1, a mass ratio of the ethyl orthosilicate, organic solvent, emulsifier and water is 12-15:100:0.5-1:30-50, the emulsifier is selected from at least one of Tween-20, Tween-40, Tween-60 and Tween-80, a temperature of the heating and stirring reaction is 50-60°C for 10-12 h, and a temperature of the calcining is 300-500°C for 1-3 h; time of the ball milling in step T2 is 2-4 h; and in step T3, a mass ratio of the SiO₂ nanosheets to the silane coupling agent is 100:22-25, the silane coupling agent is a silane coupling agent with amino groups and is selected from at least one of KH550, KH602 and KH792, and a temperature of the heating and stirring reaction is 40-50°C for 0.5-1 h;
wherein in step T4, a mass ratio of the modified SiO₂ nanosheets, aluminum isopropoxide, copper salt and citric acid is 50:12-15:7-12:3-5, time of the standing reaction is 30-50 min, a temperature of the calcining is 500-700°C for 1-3 h, and the copper salt is selected from at least one of copper chloride, copper sulfate and copper nitrate; and in step T5, a mass ratio of the CuO@SiO₂@Al₂O₃ nanosheets to the magnesium powder is 100:7-12, a temperature of the heating reduction reaction is 700-800°C for 0.5-1 h, a temperature of the hydrogen reduction reaction is 600-800°C for 1-2 h, and a ventilation rate of hydrogen is 20-30 mL/min,
S3, copper strip pretreatment: texturing the copper strip, and then cleaning;
S4, copper strip heating: heating the pretreated copper strip obtained in step S3 to 200-650°C;
S5, continuous casting: under the protection of inert gas, continuously casting the aluminum liquid treated in step S2 on the copper strip treated in step S4, performing quenching crystallization on a copper-aluminum composite material, and performing oxygen-free continuous casting; and
S6, continuous rolling: rolling the copper-aluminum composite material continuously cast in step S5 to obtain the copper-aluminum composite plate material prepared by aluminum liquid continuous casting.

2. The process according to claim 1, wherein the texturing in step S3 comprises mechanical texturing, chemical texturing or laser texturing, the mechanical texturing is texturing with a steel brush or an abrasive belt, and the cleaning is ultrasonic cleaning or laser cleaning.

3. The process according to claim 1, wherein in step S5, a casting speed is 200-1200 mm/min; a casting width is 10-100 mm; a casting thickness is 3-20 mm, a cooling rate of the quenching crystallization is 100-150°C/min, and the specific method is as follows: under the protection of inert gas, enabling the copper strip treated in step S4 to continuously pass through a continuous casting device and a crystallizer, continuously casting the aluminum liquid on the copper strip through a casting system, performing quenching crystallization on the copper-aluminum composite material through the crystallizer, and performing oxygen-free continuous casting.

4. The process according to claim 1, wherein in step S6, a thickness of the copper-aluminum composite plate material prepared by aluminum liquid continuous casting is 2-12 mm, a rolling pressure is 5000-5000000 N, a rolling speed is 300-1500 mm/min, and a rolling tension is 10000-200000 N.

5. The process according to claim 1, wherein after the cleaning in step S3, the surface is coated with a layer of ethylene glycol dimethyl ether solution of 11-mercapto undecanoic acid with a concentration of 7-12 wt%.

## Patentansprüche

1. Verfahren zur Herstellung eines Kupfer-Aluminium-Verbundplattenmaterials durch Flüssigaluminium-Strangguss, umfassend die folgenden Schritte:
S1, Schmelzen: Erhitzen eines Aluminiumbarrens auf 700-800 °C und Schmelzen für 1-3 h;
S2, Stehenlassen: Die in Schritt S1 geschmolzene Aluminiumschmelze wird entgast, und die Temperatur wird 10-30 min gehalten und stehengelassen, wobei vor der Entgasungsbehandlung Cu@Si@Al-Janus-Nanoblätter in einer Menge von 5-7 Gew.-%, bezogen auf die Aluminiumschmelze, zugesetzt werden und das Herstellungsverfahren der Cu@Si@Al-Janus-Nanoblätter wie folgt ist:
T1, Herstellung von hohlen SiO₂-Nanokugeln: Lösen von Ethylorthosilicat in einem organischen Lösungsmittel zur Herstellung einer Ölphase; Lösen eines Emulgators in Wasser zur Herstellung einer Wasserphase; tropfenweises Hinzufügen der Wasserphase zur Ölphase, Emulgieren, Einstellen des pH-Wertes der Lösung auf 10-11, Heizen und Rühren, Zentrifugieren, Waschen, Trocknen und Kalzinieren zur Herstellung von hohlen SiO₂-Nanokugeln;
T2, Kugelmahlen: Kugelmahlen der in Schritt T1 hergestellten hohlen SiO₂-Nanokugeln zur Herstellung von SiO₂-Nanoblättern;
T3, Modifizierung: Hinzufügen der in Schritt T2 hergestellten SiO₂-Nanoblätter zu Ethanol, Hinzufügen eines Silankupplungsmittels, Heizen und Rühren, Zentrifugieren, Waschen und Trocknen zur Herstellung von modifizierten SiO₂-Nanoblättern;
T4, Herstellung von CuO@SiO₂@Al₂O₃-Nanoblättern: Lösen von Aluminiumisopropoxid in Dichlormethan, Stehenlassen, Hinzufügen der in Schritt T3 hergestellten modifizierten SiO₂-Nanoblätter, die an der Grenzfläche aufschwimmen, tropfenweises Hinzufügen einer Kupfersalz enthaltenden wässrigen Lösung, anschließendes Hinzufügen von Zitronensäure, Stehenlassen, Zentrifugieren, Waschen, Trocknen und Kalzinieren zur Herstellung von CuO@SiO₂@Al₂O₃-Nanoblättern; und
T5, Reduktion: Mischen der in Schritt T4 hergestellten CuO@SiO₂@Al₂O₃-Nanoblätter mit Magnesiumpulver, Durchführen einer Heizreduktionsreaktion und anschließendes Durchführen einer Wasserstoffreduktionsreaktion zur Herstellung der Cu@Si@Al-Janus-Nanoblätter;
wobei in Schritt T1 das Massenverhältnis von Ethylorthosilicat, organischem Lösungsmittel, Emulgator und Wasser 12-15:100:0,5-1:30-50 beträgt, der Emulgator aus mindestens einem von Tween-20, Tween-40, Tween-60 und Tween-80 ausgewählt wird, die Temperatur beim Heizen und Rühren 50-60 °C beträgt und die Dauer 10-12 h beträgt sowie die Kalzinierung bei 300-500 °C für 1-3 h durchgeführt wird;
wobei die Zeit des Kugelmahlens in Schritt T2 2-4 h beträgt;
wobei in Schritt T3 das Massenverhältnis der SiO₂-Nanoblätter zum Silankupplungsmittel 100:22-25 beträgt, das Silankupplungsmittel ein aminogruppenhaltiges Silankupplungsmittel ist und aus mindestens einem von KH550, KH602 und KH792 ausgewählt wird, und die Temperatur beim Heizen und Rühren 40-50 °C für 0,5-1 h beträgt;
wobei in Schritt T4 das Massenverhältnis der modifizierten SiO₂-Nanoblätter, des Aluminiumisopropoxids, des Kupfersalzes und der Zitronensäure 50:12-15:7-12:3-5 beträgt, die Zeit des Stehenlassens 30-50 min beträgt, die Kalzinierung bei 500-700 °C für 1-3 h durchgeführt wird und das Kupfersalz aus mindestens einem von Kupferchlorid, Kupfersulfat und Kupfernitrat ausgewählt wird; und
wobei in Schritt T5 das Massenverhältnis der CuO@SiO₂@Al₂O₃-Nanoblätter zum Magnesiumpulver 100:7-12 beträgt, die Temperatur der Heizreduktionsreaktion 700-800 °C für 0,5-1 h beträgt, die Temperatur der Wasserstoffreduktionsreaktion 600-800 °C für 1-2 h beträgt und die Wasserstoffdurchflussrate 20-30 mL/min beträgt;
S3, Vorbehandlung des Kupferbandes: Aufrauen der Oberfläche des Kupferbandes und anschließendes Reinigen;
S4, Erhitzen des Kupferbandes: Erhitzen des in Schritt S3 erhaltenen vorbehandelten Kupferbandes auf 200-650 °C;
S5, Strangguss: Unter Schutz eines Inertgases kontinuierliches Aufgießen der in Schritt S2 behandelten Aluminiumschmelze auf das in Schritt S4 behandelte Kupferband, Durchführen einer Abschreckungskristallisation am Kupfer-Aluminium-Verbundwerkstoff und Durchführen eines sauerstofffreien Stranggusses; und
S6, kontinuierliches Walzen: Walzen des in Schritt S5 stranggegossenen Kupfer-Aluminium-Verbundwerkstoffs zur Herstellung eines durch Flüssigaluminium-Strangguss hergestellten Kupfer-Aluminium-Verbundplattenmaterials.

2. Verfahren nach Anspruch 1, **dadurch gekennzeichnet, dass** das Aufrauen in Schritt S3 ein mechanisches Aufrauen, ein chemisches Aufrauen oder ein Laserstrahl-Aufrauen umfasst, wobei das mechanische Aufrauen ein Aufrauen mit einer Stahlbürste oder einem Schleifband ist und die Reinigung eine Ultraschallreinigung oder eine Laserstrahlreinigung ist.

3. Verfahren nach Anspruch 1, **dadurch gekennzeichnet, dass** in Schritt S5 eine Gießgeschwindigkeit 200-1.200 mm/min beträgt, die Gießbreite 10-100 mm beträgt, die Gießdicke 3-20 mm beträgt und die Abkühlrate der Abschreckungskristallisation 100-150 °C/min beträgt, wobei das Verfahren wie folgt durchgeführt wird: Unter Schutz eines Inertgases wird das in Schritt S4 behandelte Kupferband kontinuierlich durch eine Stranggussvorrichtung und einen Kristallisator geführt, wobei die Aluminiumschmelze über ein Gießsystem kontinuierlich auf das Kupferband aufgegossen wird, am Kupfer-Aluminium-Verbundwerkstoff wird durch den Kristallisator eine Abschreckungskristallisation durchgeführt, und es wird ein sauerstofffreier Strangguss durchgeführt.

4. Verfahren nach Anspruch 1, **dadurch gekennzeichnet, dass** in Schritt S6 die Dicke des durch Flüssigaluminium-Strangguss hergestellten Kupfer-Aluminium-Verbundplattenmaterials 2-12 mm beträgt, der Walzdruck 5.000-5.000.000 N beträgt, die Walzgeschwindigkeit 300-1.500 mm/min beträgt und die Walzspannung 10.000-200.000 N beträgt.

5. Verfahren nach Anspruch 1, **dadurch gekennzeichnet, dass** nach der Reinigung in Schritt S3 die Oberfläche mit einer Schicht einer Lösung von 11-Mercaptoundecansäure in Ethylenglykoldimethylether mit einer Konzentration von 7-12 Gew.-% beschichtet wird.

## Revendications

1. Procédé de fabrication d'un matériau de plaque composite cuivre-aluminium par coulée continue d'aluminium liquide, comprenant les étapes suivantes :
S1, fusion : chauffage d'un lingot d'aluminium à une température de 700 à 800 °C et fusion pendant 1 à 3 h ;
S2, repos : dégazage de l'aluminium liquide fondu à l'étape S1, et maintien de la température et repos pendant 10 à 30 min ; ajout de nanofeuillets Janus Cu@Si@Al dans une quantité de 5 à 7 % en poids de l'aluminium liquide avant le traitement de dégazage, un procédé de préparation des nanofeuillets Janus Cu@Si@Al étant le suivant :
T1, préparation de nanosphères creuses de SiO₂ : dissolution de l'orthosilicate d'éthyle dans un solvant organique pour préparer une phase huileuse ; dissolution d'un émulsifiant dans l'eau pour préparer une phase aqueuse ; ajout goutte à goutte de la phase aqueuse dans la phase huileuse, émulsification, ajustement du pH de la solution à 10-11, réalisation d'une réaction sous chauffage et agitation, centrifugation, lavage, séchage et calcination pour préparer des nanosphères creuses de SiO₂ ;
T2, broyage à billes : réalisation d'un broyage à billes sur les nanosphères creuses de SiO₂ préparées à l'étape T1 pour préparer des nanofeuillets de SiO₂ ;
T3, modification : ajout des nanofeuillets de SiO₂ préparés à l'étape T2 dans de l'éthanol, ajout d'un agent de couplage silane, réalisation d'une réaction sous chauffage et agitation, centrifugation, lavage et séchage pour préparer des nanofeuillets de SiO₂ modifiés ;
T4, préparation de nanofeuillets de CuO@SiO₂@Al₂O₃ : dissolution de l'isopropoxyde d'aluminium dans du dichlorométhane, repos, ajout des nanofeuillets de SiO₂ modifiés préparés à l'étape T3, qui flottent à l'interface, ajout goutte à goutte d'une solution aqueuse contenant un sel de cuivre, puis ajout de l'acide citrique, réalisation d'une réaction au repos, centrifugation, lavage, séchage et calcination pour préparer des nanofeuillets de CuO@SiO₂@Al₂O₃ ; et
T5, réduction : mélange des nanofeuillets de CuO@SiO₂@Al₂O₃ préparés à l'étape T4 avec de la poudre de magnésium, réalisation d'une réaction de réduction par chauffage, puis réalisation d'une réaction de réduction par hydrogène pour préparer les nanofeuillets Janus Cu@Si@Al ;
dans lequel, à l'étape T1, un rapport massique entre l'orthosilicate d'éthyle, le solvant organique, l'émulsifiant et l'eau est de 12-15:100:0,5-1:30-50, l'émulsifiant est choisi parmi au moins l'un de Tween-20, Tween-40, Tween-60 et Tween-80, une température de la réaction sous chauffage et agitation est de 50 à 60 °C pendant 10 à 12 h, et une température de la calcination est de 300 à 500 °C pendant 1 à 3 h ; une durée du broyage à billes à l'étape T2 est de 2 à 4 h ; et à l'étape T3, le rapport massique des nanofeuillets de SiO₂ à l'agent de couplage silane est de 100:22-25, l'agent de couplage silane est un agent de couplage silane avec des groupes amino et est choisi parmi au moins l'un de KH550, KH602 et KH792, et une température de la réaction sous chauffage et agitation est de 40 à 50 °C pendant 0,5 à 1 h ;
dans lequel, à l'étape T4, un rapport massique entre les nanofeuillets de SiO₂ modifiés, l'isopropoxyde d'aluminium, le sel de cuivre et l'acide citrique est de 50:12-15:7-12:3-5, une durée de la réaction au repos est de 30 à 50 min, une température de la calcination est de 500 à 700 °C pendant 1 à 3 h, et le sel de cuivre est choisi parmi au moins l'un du chlorure de cuivre, du sulfate de cuivre et du nitrate de cuivre ; et à l'étape T5, un rapport massique des nanofeuillets de CuO@SiO₂@Al₂O₃ à la poudre de magnésium est de 100:7-12, une température de la réaction de réduction par chauffage est de 700 à 800 °C pendant 0,5 à 1 h, une température de la réaction de réduction par hydrogène est de 600 à 800 °C pendant 1 à 2 h, et un débit de ventilation de l'hydrogène est de 20 à 30 mL/min ;
S3, prétraitement de la bande de cuivre : texturation de la bande de cuivre, puis nettoyage ;
S4, chauffage de la bande de cuivre : chauffage de la bande de cuivre prétraitée obtenue à l'étape S3 à une température de 200 à 650 °C ;
S5, coulée continue : sous la protection d'un gaz inerte, coulée continue de l'aluminium liquide traité à l'étape S2 sur la bande de cuivre traitée à l'étape S4, réalisation d'une cristallisation par trempe sur un matériau composite cuivre-aluminium, et réalisation d'une coulée continue sans oxygène ; et
S6, laminage continu : laminage du matériau composite cuivre-aluminium coulé en continu à l'étape S5 pour obtenir le matériau de plaque composite cuivre-aluminium préparé par coulée continue d'aluminium liquide.

2. Procédé selon la revendication 1, dans lequel la texturation à l'étape S3 comprend une texturation mécanique, une texturation chimique ou une texturation laser, la texturation mécanique est une texturation avec une brosse métallique ou une bande abrasive, et le nettoyage est un nettoyage par ultrasons ou un nettoyage laser.

3. Procédé selon la revendication 1, dans lequel, à l'étape S5, une vitesse de coulée est de 200 à 1200 mm/min ; une largeur de coulée est de 10 à 100 mm ; une épaisseur de coulée est de 3 à 20 mm, une vitesse de refroidissement de la cristallisation par trempe est de 100 à 150 °C/min, et le procédé spécifique est le suivant : sous la protection d'un gaz inerte, faire passer en continu la bande de cuivre traitée à l'étape S4 à travers un dispositif de coulée continue et une lingotière, couler en continu l'aluminium liquide sur la bande de cuivre par un système de coulée, effectuer une cristallisation par trempe du matériau composite cuivre-aluminium dans la lingotière, et effectuer une coulée continue sans oxygène.

4. Procédé selon la revendication 1, dans lequel, à l'étape S6, une épaisseur du matériau de plaque composite cuivre-aluminium préparé par coulée continue d'aluminium liquide est de 2 à 12 mm, une pression de laminage est de 5 000 à 5 000 000 N, une vitesse de laminage est de 300 à 1500 mm/min, et une tension de laminage est de 10 000 à 200 000 N.

5. Procédé selon la revendication 1, dans lequel, après le nettoyage à l'étape S3, la surface est revêtue d'une couche d'une solution d'acide 11-mercaptoundécanoïque dans l'éther diméthylique de l'éthylène glycol à une concentration de 7 à 12 % en poids.
